Europäisches Patentamt

(19) European Patent Office

Office européen des brevets

(11) **EP 0 887 307 B1**

(12) **EUROPÄISCHE PATENTSCHRIFT**

(45) Veröffentlichungstag und Bekanntmachung des Hinweises auf die Patenterteilung:
**25.04.2001 Patentblatt 2001/17**

(51) Int Cl.[7]: **C01B 3/58**

(21) Anmeldenummer: **98110755.0**

(22) Anmeldetag: **12.06.1998**

(54) **Vorrichtung und Verfahren zum Starten der Vorrichtung zur Erzeugung von wasserstoffreichem Gas**

Apparatus for the production of hydrogen rich gas and process for starting this apparatus

Dispositif pour la production d' un gaz riche en hydrogène et procédé pour sa mise en marche

(84) Benannte Vertragsstaaten:
**DE FR GB IT**

(30) Priorität: **28.06.1997 DE 19727589**

(43) Veröffentlichungstag der Anmeldung:
**30.12.1998 Patentblatt 1998/53**

(73) Patentinhaber: **XCELLSIS GmbH**
**73230 Kirchheim / Teck-Nabern (DE)**

(72) Erfinder:
• **Autenrieth, Rainer**
**89155 Erbach (DE)**

• **Strobel, Barbara**
**89160 Dornstadt (DE)**

(56) Entgegenhaltungen:
• **PATENT ABSTRACTS OF JAPAN vol. 017, no. 162 (C-1042), 30. März 1993 & JP 04 325401 A (TOYO ENG CORP), 13. November 1992**
• **PATENT ABSTRACTS OF JAPAN vol. 097, no. 003, 31. März 1997 & JP 08 301601 A (ISHIKAWAJIMA HARIMA HEAVY IND CO LTD), 19. November 1996**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Erzeugung von wasserstoffreichem Gas gemäß dem Oberbegriff des Patentanspruchs 1, sowie ein Verfahren zum Starten der Vorrichtung.

Eine gattungsgemäße Vorrichtung zur Wasserstofferzeugung mit einer Vorreformierungsstufe und einer Shiftstufe, die durch eine Wärmeaustauschfläche voneinander getrennt sind, ist aus der JP 4-325401 A bekannt, wobei zumindest ein Teil der für die Wasserdampfreformierung benötigten thermischen Energie von der Gasreinigungsvorstufe auf die Vorreformierungsstufe übertragen wird.

Es ist die Aufgabe der Erfindung, eine Vorrichtung zur Erzeugung von wasserstoffreichem Gas zu schaffen, die einfacher und kompakter aufgebaut ist, einen höheren Wärmetransfer und eine verbesserte Gasreinigungsfunktion aufweist. Außerdem ist es die Aufgabe der Erfindung, ein Verfahren zum einfachen und schnellen Starten der Vorrichtung zu schaffen.

Dieses Problem wird durch eine Vorrichtung beziehungsweise eines Verfahrens mit den Merkmalen des Patentanspruchs 1 beziehungsweise 3 gelöst.

Ähnliche Vorrichtung und Verfahren sind auch in der Anmeldung EP 0 887 306 A offenbart, die am gleichen Tag angemeldet wurde.

Durch die Luftzudosierung und anschließende selektive katalytische Oxidation des Kohlenmonoxids kann eine höhere Wärmeentwicklung in der Gasreinigungsstufe und damit eine bessere Beheizung des Reaktionsraumes gewährleistet werden. Außerdem weist eine selektive Oxidationsstufe gegenüber einer Shiftstufe eine verbesserte Gasreinigungsfunktion auf. Weiterhin weist die Vorrichtung eine gute Kaltstartfähigkeit, ein gutes dynamisches Verhalten bei Lastwechseln und einen verbesserten Wirkungsgrad auf, wodurch ein Einsatz bei mobilen Anwendungen möglich wird. Die verbesserte Wärmeausbeute in der CO-Oxidationsstufe reicht aus, um den Reformer vollständig zu beheizen. Eine zusätzliche Heizvorrichtung wird nicht benötigt. Vielmehr können die beiden Reaktionen durch eine geeignete Auslegung der Reaktionsraten in den beiden Teilvorrichtungen derart gekoppelt werden, daß sich in der Vorrichtung ein vorgegebenes Temperaturniveau selbständig einstellt. Auf eine aufwendige Temperaturregelung kann daher verzichtet werden.

Beim Starten der Vorrichtung kann der CO-Oxidator vorübergehend als katalytischer Brenner betrieben werden, so daß die Vorrichtung einfach und schnell auf die notwendige Betriebstemperatur gebracht werden kann.

Weitere Vorteile und Ausgestaltungen gehen aus den Unteransprüchen und der Beschreibung hervor. Die Erfindung ist nachstehend anhand einer Zeichnung näher beschrieben, wobei

Fig. 1       eine Prinzipdarstellung einer Vorrichtung zur Erzeugung von wasserstoffreichem Gas und

Fig. 2       ein schematisches Ausführungsbeispiel einer Vorrichtung gemäß Fig.1 in Plattenbauweise zeigt

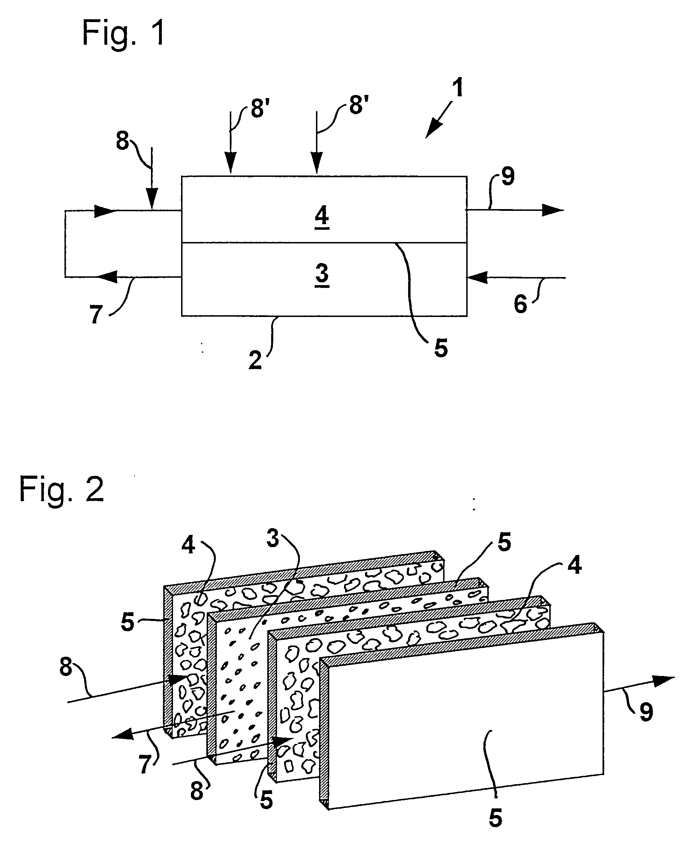

Die in Fig. 1 insgesamt mit 1 gekennzeichnete Vorrichtung besteht aus einem gemeinsamen Gehäuse 2, in dem eine Vorrichtung 3 zur katalytischen Wasserdampfreformierung eines Wasserdampf/Brennstoffgemisches- im folgenden als Reformer bezeichnet - und eine Vorrichtung 4 zur selektiven Kohlenmonoxid-Oxidation - im folgenden als CO-Oxidator bezeichnet - integriert sind. Die Vorrichtung 1 ist als Wärmetauscher aufgebaut, wobei zwischen dem Reformer 3 und dem CO-Oxidator 4 eine Wärmeaustauschfläche 5 vorgesehen ist. Als Brennstoff kommen beliebige kohlenwasserstoffhaltigen Ausgangsstoffe in Frage, wobei das folgende Ausführungsbeispiel anhand von Methanol als Brennstoff erläutert wird.

Dem Reformer 3 wird über eine Zuleitung 6 ein gasförmiges Wasserdampf/Methanolgemisch zugeführt. Das Reformat wird dann nach dem Durchströmen des Reformers 3 über eine Reformatzuleitung 7 direkt in den CO-Oxidator 4 geführt. Es ist aber auch möglich, daß der Reformer 3 mehrere Reaktionskammern aufweist, daß die Gasreinigungs-stufe 4 mehrere Reinigungskammern aufweist, und daß die Reaktions- und Reinigungskammern 3, 4 abwechselnd angeordnet sind und jeweils über eine gemeinsame Wärmeaustauschfläche 5 in Wärmekontakt zueinander stehen. Über eine Sauerstoffleitung 8 wird dem CO-Oxidator 4 außerdem ein sauerstoffhaltiges Gas - vorzugsweise Luft - zugeführt. Dies kann entweder, wie im Ausführungsbeispiel dargestellt, in die Reformatzuleitung 7 oder auch direkt in den CO-Oxidator 4 beziehungsweise über mehrere über die Reaktorlänge verteilte Dosierstellen 8' erfolgen. Nach dem Durchströmen des CO-Oxidators 4 wird das gereinigte Reformat dann über eine weitere Leitung 9 direkt einer ebenfalls nicht gezeigten Brennstoffzelle oder einer beziehungsweise mehreren weiteren Gasreinigungsstufen zugeführt.

Bei der katalytischen Wasserdampfreformierung von Methanol wird ein Gemisch aus Methanol und Wasserdampf unter Zufuhr von Wärme an einem geeigneten Katalysator zu Wasserstoff umgesetzt, wobei gleichzeitig Koh-lendioxid entsteht:

$$CH_3OH + H_2O \rightarrow 3\,H_2 + CO_2 \text{ oder } CH_3OH \rightarrow 2\,H_2 + CO$$

Bei mobilen Anwendungen, beispielsweise bei der Wasserdampfreformierung für Brennstoffzellen in Kraftfahrzeugen, ist es wichtig, daß die benötigte Ausbeute an Wasserstoffgas bei möglichst geringem Platzbedarf und Gewicht bereitgestellt werden kann. Da die Reaktion nur unter Wärmezufuhr abläuft, ist die Ausbeute jedoch abhängig vom Wärmeeintrag. Daher muß der Reaktor so ausgebildet sein, daß ein optimaler Wärmeübergang von einer bereitgestellten Wärmequelle auf das Reformgas und auf das Katalysatormaterial gewährleistet wird.

Der CO-Oxidator 4 wird zur Entfernung von Kohlenmonoxid CO aus dem im Reformer 3 erzeugten $H_2$-reichen Gas mittels selektiver Oxidation verwendet. Dieses sogenannte Reformat, bestehend beispielsweise aus Wasserstoff mit einem CO-Anteil von 0,5-3 Vol%, wird nach entsprechender Reinigung vorzugsweise für den mobilen Einsatz von PEM-Brennstoffzellen in Fahrzeugen verwendet. Bei der selektiven Oxidation wird dem Reformat über die Sauerstoffleitung 8 zusätzlich Sauerstoff, beispielsweise in Form von Umgebungsluft, zugeführt, wobei dann das Kohlenmonoxid CO durch den Sauerstoff $O_2$ zu Kohlendioxid $CO_2$ oxydiert wird. Alternativ kann der Sauerstoff jedoch auch an einer oder mehreren Stellen direkt in den CO-Oxidator 4 eingebracht werden. Diese Reaktion wird an einem geeigneten Oxidationskatalysator, beispielsweise Platin und/oder Ruthenium auf einem geeigneten Träger, wie $Al_2O_3$ oder einem Zeolith in Pulverform, durchgeführt. Hierbei wird dem Reformat Luft oder Sauerstoff in einem atomaren Verhältnis CO zu O von ungefähr 1:1 bis 1:4 zugeführt. Um eine vorwiegende Reaktion zwischen dem Sauerstoff und dem Wasserstoff zu verhindern sollte die Reaktion nicht bei Temperaturen oberhalb von 350° C ablaufen. Unterhalb von ungefähr 150° C ist aber auf der anderen Seite die Aktivität des Katalysators für die CO-Oxidation zu gering. Daher sollte die Reaktion in Abhängigkeit vom verwendeten Katalysator in einem vorgegebenen Temperaturintervall, hier ungefähr zwischen 150° und 350° C, ablaufen.

Da es sich bei der CO-Oxidation um eine stark exotherme Reaktion handelt, reicht die im CO-Oxidator 4 freigesetzte und mit Hilfe der Wärmeaustauschfläche 5 auf den Reformer 3 übertragene Energie für eine vollständige Beheizung des Reformers 3 aus. Durch eine entsprechende Auslegung der Reaktionsraten im Reformer 3 beziehungsweise im CO-Oxidator 4 ist es somit möglich, die beiden Teilvorrichtungen derart thermisch zu koppeln, daß sich das vorgegebene Temperaturniveau selbständig einstellt. Durch diese Anordnung kann für den Reformer 3 beziehungsweise CO-Oxidator 4 auf eine zusätzliche Beheizung beziehungsweise Kühlung, einschließlich zugehörige Regelkreise, verzichtet werden, wodurch das Gesamtsystem erheblich vereinfacht wird.

Die Auslegung des Reaktionsraten erfolgt bei vorgegebenem Temperaturniveau über die Geometrie der Vorrichtung 1 und/oder über die eingebrachten Katalysatormengen beziehungsweise die Verweilzeiten der Gase im Reformer 3 beziehungsweise CO-Oxidator 4. Die Reaktionsraten werden so eingestellt, daß die vom CO-Oxidator 4 bereitgestellte Energiemenge der vom Reformer 3 benötigten Energiemenge entspricht. Hierbei müssen jedoch auch die von den heißen Gasen aus dem Reformer 3 beziehungsweise CO-Oxidator 4 ausgetragenen Wärmemengen berücksichtigt werden.

Die selbsttätige Einstellung des Temperaturniveaus basiert bei geeigneter Auslegung des Gesamtsystems 1 auf der Natur der beiden gekoppelten Teilprozesse. Wird nämlich im CO-Oxidator 4 mehr Energie freigesetzt, so steigt bedingt dadurch die Temperaturzunahme auch die Reaktionsrate im Reformer 3, wodurch dort mehr Energie verbraucht wird, was schließlich wiederum zu einer Verringerung der Temperatur führt. Auf der anderen Seite führt eine Temperaturverringerung, wie sie durch eine verminderte Reaktionsrate im CO-Oxidator 4 verursacht werden kann, auch zu einer Verringerung der Reaktionsrate im Reformer 3. Dadurch wird weniger Energie im Reformer 3 verbraucht, so daß das Temperaturniveau wieder ansteigt. Dieser Selbstregulierungsmechanismus führt bei einer geeigneten thermischen Kopplung und Auslegung der beiden Teilsysteme zu einer erheblichen Vereinfachung des Gesamtsystems.

Ein Ausführungsbeispiel in schematischer Darstellung zeigt Fig. 2, wobei gegenüber Fig. 1 gleiche Teile mit identischen Bezugzeichen gekennzeichnet sind. Die gezeigte Vorrichtung 1 ist in Plattenbauweise ausgeführt. Die Wärmeaustauschflächen 5 sind im nicht dargestellten Gehäuse in Form von parallel angeordneten Blechen eingebracht. Zwischen den einzelnen Wärmeaustauschflächen 5 sind abwechselnd Reformierungs- und CO-Oxidationskammern 3, 4 gebildet, die wie bereits oben beschrieben, mit geeignetem Katalysatormaterial befüllt sind. Neben der Katalysatorschüttung ist es jedoch ebenfalls möglich, das Katalysatormaterial in anderer Form, beispielsweise durch Beschichtung der Wärmeaustauschflächen und/oder geeigneter Stützstrukturen, in die Reaktionskammern 3, 4 einzubringen. Die Zu- beziehungsweise Abfuhr erfolgt in an sich bekannter Weise über externe Zuführungen oder auch durch entsprechende Bohrungen in den Wärmeaustauschflächen 5. Neben solchen Plattenanordnungen sind jedoch auch Rohrbündelanordnungen für die erfindungsgemäße Vorrichtung geeignet.

Für den Kaltstart der Vorrichtung ist es möglich, den CO-Oxidator 4 vorübergehend als katalytischen Brenner einzusetzen. Hierzu wird während der Startphase ein Brennstoff/Luftgemisch, beispielsweise flüssiges Methanol/Luft oder Wasserstoff/Luft in den CO-Oxidator 4 geleitet und dort am CO-Oxidationskatalysator oxidiert. Durch diese katalytische Oxidation wird Wärmeenergie freigesetzt und damit die gesamte Vorrichtung 1 schnell aufgeheizt. Nach einer vorgegebenen Zeitdauer oder wenn eine vorgegebene Temperatur in der Vorrichtung 1 erreicht ist, wird die Zufuhr des Brennstoff/Luftgemisches zum CO-Oxidator 4 gestoppt. Anschließend wird die Vorrichtung 1 dann in der bereits oben beschriebenen Art und Weise betrieben.

**Patentansprüche**

1. Vorrichtung zur Erzeugung von wasserstoffreichem Gas mit einem Reformer zur katalytischen Wasserdampfreformierung eines Wasserdampf/Brennstoffgemisches unter Zufuhr von Wärmeenergie, mit einer Gasreinigungsstufe zur Entfernung von Kohlenmonoxid aus dem wasserstoffreichem Gas unter Wärmeabgabe und mit Mitteln zur Übertragung von Wärmeenergie aus der Gasreinigungs-stufe in den Reformer, wobei Gasreinigungsstufe und Reformer in einem gemeinsamen Gehäuse integriert sind,
**dadurch gekennzeichnet**,
daß ein Anschluß (8) oder mehrere über der Reaktorlauflänge angeordnete Dosierstellen (8') zur Zufuhr eines sauerstoffhaltigen Gases zur Gasreinigungsstufe (4) vorgesehen sind, daß die Gasreinigungsstufe (4) einen Katalysator zur selektiven katalytischen CO-Oxidation enthält, und daß der Reformer (3) vollständig durch die Gasreinigungsstufe (4) beheizt wird, wobei der Reformer (3) und die Gasreinigungsstufe (4) jeweils Reaktionsraten aufweisen, bei denen sich durch die Kopplung der beiden Reaktionen ein vorgegebenes Temperaturniveau in der Vorrichtung (1) selbständig einstellt.

2. Vorrichtung nach Anspruch 1,
**dadurch gekennzeichnet**,

daß der Reformer (3) mehrere Reaktionskammern aufweist, daß die Gasreinigungsstufe (4) mehrere Reinigungskammern aufweist, und
daß die Reaktions- und Reinigungskammern (3, 4) abwechselnd angeordnet sind und jeweils über eine gemeinsame Wärmeaustauschfläche (5) in Wärmekontakt zueinander stehen.

3. Verfahren zum Starten einer Vorrichtung zur Erzeugung von wasserstoffreichem Gas mit einem Reformer zur katalytischen Wasserdampfreformierung eines Wasserdampf/Brennstoffgemisches unter Zufuhr von Wärmeenergie, mit einer Gasreinigungsstufe zur Entfernung von Kohlenmonoxid aus dem wasserstoffreichem Gas mittels selektiver katalytischer CO-Oxidation unter Wärmeabgabe, wobei ein Anschluß oder mehrere über der Reaktorlauflänge angeordnete Dosierstellen zur Zufuhr eines sauerstoffhaltigen Gases zur Gasreinigungsstufe vorgesehen sind, und mit Mitteln zur Übertragung von Wärmeenergie aus der Gasreinigungsstufe in den Reformer, wobei Gasreinigungsstufe und Reformer in einem gemeinsamen Gehäuse integriert sind, wobei während der Startphase ein Brennstoff/Luftgemisch in die Gasreinigungsstufe (4) geleitet und dort zur Beheizung der Vorrichtung (1) am CO-Oxidationskatalysator oxidiert wird, und wobei nach Beendigung der Startphase die Zufuhr des Brennstoff/ Luftgemisches zur Gasreinigungsstufe (4) gestoppt, der Reformer (3) durch Zufuhr eines Wasserdampf/Brennstoffgemisches gestartet und das im Reformer (3) erzeugte Reformat in die Gasreinigungsstufe (4) geleitet wird.

**Claims**

1. Device for the production of hydrogen-rich gas, comprising a reformer for the catalytic steam reformation of a steam/fuel mixture supplied with heat energy, also comprising a gas purification stage for the removal of carbon monoxide from the hydrogen-rich gas with release of heat, and having means for transferring heat energy from the gas purification stage to the reformer, such that the gas purification stage and the reformer are integrated in a common housing,
**characterised in that**
a connection (8) or several feed points (8') arranged along the length of the reactor are provided for the supply of a gas containing oxygen into the gas purification stage (4), the gas purification stage (4) contains a catalyst for the selective catalytic oxidation of CO, and the reformer (**3**) is heated completely by the gas purification stage (4), and such that the respective reaction rates in the reformer (3) and the gas purification stage (4) are so chosen that by coupling of the two reactions a predetermined temperature level is established automatically in the device (1).

2. Device according to Claim 1,
**characterised in that**
the reformer (3) comprises several reaction chambers, the gas purification stage (4) comprises several reaction chambers, and the reaction and purification chambers (3, 4) are arranged in alternation and are in thermal contact with one another via a common heat exchange surface (5).

3. Process for the starting of a device for the production of hydrogen-rich gas, comprising a reformer for the catalytic steam reformation of a steam/fuel mixture supplied with heat energy, also comprising a gas purification stage for the removal of carbon monoxide from the hydrogen-rich gas by selective catalytic CO oxidation with release of heat, such that a connection or several feed points arranged along the length of the reactor are provided for the supply of a gas containing oxygen into the gas purification stage, and having means for transferring heat energy from the gas purification stage to the reformer, the gas purification stage and the reformer being integrated in a common housing, and such that during the start-up phase a fuel/air mixture is passed into the gas purification stage (4) and there oxidised on the CO oxidation catalyst in order to heat the device (1), and at the end of the start-up phase the supply of fuel/air mixture to the gas purification stage (4) is stopped, the reformer (3) is started by supplying it with a steam/fuel mixture, and the reformate produced in the reformer (3) is passed into the gas purification stage (4).

**Revendications**

1. Dispositif de génération de gaz riche en hydrogène, avec un reformeur pour effectuer le reformage catalytique à la vapeur d'eau d'un mélange vapeur d'eau/carburant avec apport d'énergie calorifique, avec un étage d'épuration des gaz pour éliminer le monoxyde de carbone depuis le gaz riche en hydrogène, avec évacuation de chaleur et avec des moyens pour transmettre de l'énergie calorifique émanant de l'étage d'épuration des gaz dans le reformeur, l'étage d'épuration des gaz et le reformeur étant intégrés dans un carter commun,
   caractérisé en ce qu'
   un raccordement (8) ou plusieurs points de dosage (8') disposés sur la longueur active du réacteur étant prévus pour l'apport d'un gaz contenant de l'oxygène à l'étage d'épuration des gaz (4), en ce que l'étage d'épuration de gaz (4) contient un catalyseur pour effectuer l'oxydation sélective catalytique du CO, et en ce que le reformeur (3) est complètement chauffé par l'étage d'épuration des gaz (4), le reformeur (3) et l'étage d'épuration des gaz (4) présentant chacun des taux de réaction pour lesquels un niveau de température prédéterminé est réglé automatiquement dans le dispositif (1), grâce au couplage des deux réactions.

2. Dispositif selon la revendication 1, caractérisé en ce que le reformeur (3) présente plusieurs chambres de réaction, en ce que l'étage d'épuration des gaz (4) présente plusieurs chambres d'épuration, et en ce que les chambres de réaction et d'épuration (3, 4) sont disposées en alternance et sont placées l'une par rapport à l'autre chaque fois en contact thermique, par l'intermédiaire d'une surface d'échange de chaleur (5) commune.

3. Procédé de démarrage d'un dispositif de génération de gaz riche en hydrogène, avec un reformeur pour le reformage catalytique à la vapeur d'eau d'un mélange vapeur d'eau/carburant avec apport d'énergie calorifique, avec un étage d'épuration des gaz pour l'élimination du monoxyde de carbone à partir du gaz riche en hydrogène, par oxydation catalytique sélective du CO avec évacuation de chaleur, un raccordement, ou plusieurs points de dosage disposés sur la longueur active du réacteur, étant prévu(s) pour fournir un gaz contenant de l'oxygène à l'étage d'épuration des gaz, et avec des moyens pour transmettre de l'énergie calorifique émanant de l'étage d'épuration des gaz, dans le reformeur, l'étage d'épuration des gaz et le reformeur étant intégrés dans un carter commun, où, pendant la phase de démarrage, un mélange air/carburant est passé dans l'étage d'épuration des gaz (4), et y est oxydé au catalyseur d'oxydation du CO, pour chauffer le dispositif (1), et où, après achèvement de la phase de démarrage, l'apport de mélange d'air/carburant à l'étage d'épuration des gaz (4) est stoppé, le reformeur (3) étant démarré par apport d'un mélange vapeur d'eau/carburant, et en ce que le reformat, généré dans le reformeur (3), est passé dans l'étage d'épuration des gaz (4).

Fig. 1

Fig. 2